# EUROPEAN PATENT SPECIFICATION

(11) **EP 2 576 077 B1**
(45) Date of publication and mention of the grant of the patent: **26.02.2014**
(21) Application number: 11743621.2
(22) Date of filing: 07.06.2011
(51) Int. Cl.: B05B 5/04, B05B 5/08, B05B 5/10, B05B 5/043, B05B 3/10, H02M 7/10

(54) **ELECTROSTATIC PAINTING APPARATUS AND ELECTROSTATIC METHOD**
ELEKTROSTATISCHE LACKIERVORRICHTUNG UND ELEKTROSTATISCHES VERFAHREN
APPAREIL DE PEINTURE ÉLECTROSTATIQUE ET PROCÉDÉ ÉLECTROSTATIQUE

(30) Priority: 07.06.2010 JP 2010130283
(43) Date of publication of application: 10.04.2013
(73) Proprietor: TOYOTA JIDOSHA KABUSHIKI KAISHA, Toyota-shi, Aichi-ken, 471-8571 (JP)
(72) Inventor: YAMASAKI, Isamu, Toyota-shi Aichi-ken 471-8571 (JP); NAGAI, Kimiyoshi, Toyota-shi Aichi-ken 471-8571 (JP); KAWAMOTO, Atsushi, Toyota-shi Aichi-ken 471-8571 (JP)
(74) Representative: Albutt, Anthony John
(86) International application number: PCT/IB2011/001713
(87) International publication number: WO 2011/154842

(56) References cited:
- WO-A1-2011/039645
- JP-A- 7 251 099
- JP-A- 2010 269 265
- US-A1- 2006 175 439

## Description

### BACKGROUND OF THE INVENTION

### 1. Field of the Invention

The invention relates to an electrostatic painting apparatus and an electrostatic painting method.

### 2. Description of Related Art

Electrostatic painting is known as a method of painting, for example, a vehicle body of a motor vehicle. According to an electrostatic painting method, an electric field is developed between a painting target and a painting device and thus a potential difference is caused between the painting target and a paint. Thus, the Coulomb force acts on the paint, causing the paint to effectively adhere to the painting target. According to this method, a uniform paint film is formed, and a high paint adhesion efficiency is achieved.. Therefore, electrostatic painting has been widely adopted. A known technique related to an electrostatic painting apparatus and an electrostatic painting method is described in, for example, Japanese Patent Application Publication No. 2001-170522 (JP 2001-170522 A) described below.

According to the technology described in Japanese Patent Application Publication No. 2001-170522, a negative-output multi-stage cascade connection voltage doubler rectification circuit (e.g., Cockcroft-Walton circuit) that is formed by cascading multiple capacitors and multiple diodes is used to apply a high negative voltage to a charge electrode. With an electrostatic painting apparatus and a method that use the technology, electrostatic painting is performed under a condition where a painting target is grounded (i.e., the electric potential of the painting target is "0") and a high negative voltage is applied to a painting device.

If a high negative voltage is applied to the painting device, negative corona discharge occurs at, for example, the edge (front edge) of a bell cup. With regard to the characteristics of negative corona discharge, for example, negative corona discharge occurs at a voltage lower than the voltage at which positive corona discharge occurs, and complete dielectric breakdown occurs at a voltage higher than that in the case of positive corona discharge and therefore negative corona discharge is less likely to progress to spark discharge. For such reasons, it has been considered that a high negative voltage is suitable as a high voltage generated by a high-voltage generator used for electrostatic painting. Therefore, electrostatic painting apparatuses have been structured to apply a high negative voltage to the painting device using a high-voltage generator.

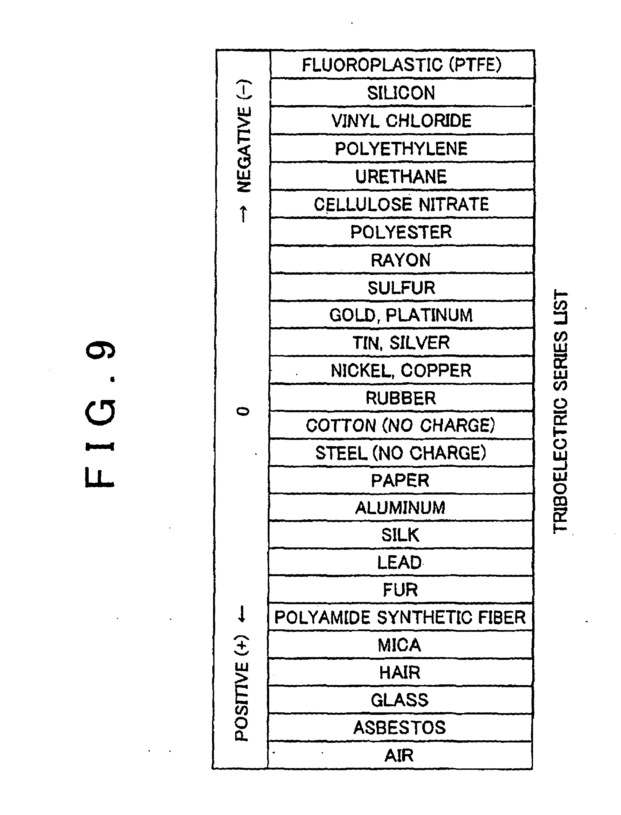

With the above-described structure of the electrostatic painting apparatus, the paint is negatively electrified. The sprayed paint diffuses while contacting shaping air. With regard to the characteristics of air (i.e., shaping air), air is most likely to be positively electrified, as shown in the triboelectric series chart shown in FIG. 9.. Thus, it is considered that when the negatively electrified paint contacts the air (shaping air), the electric charges are neutralized by the air, resulting in a decrease in the electrification amount.

In recent years, further reductions of environmental burdens have been sought, and therefore there have been, in the field of electrostatic painting, increasing demands for technologies for further improvement in the paint adhesion efficiencies. For example, the paint adhesion efficiency may be effectively improved by increasing the electrification amount of the paint.

Documents US2006/0175439 and JP07251099 disclose the preamble of claims 1 and 3.

### SUMMARY OF THE INVENTION

The invention provides an electrostatic painting apparatus and an electrostatic painting method that achieve a higher paint adhesion efficiency by increasing the electrification amount of a paint using shaping air based on the position of air in a triboelectric series chart and by increasing the intensity of an electric field developed between a painting target and a painting device.

A first aspect of the invention relates to an electrostatic painting apparatus including: a paint gun that includes an atomization portion that atomizes a paint and an air discharge portion that discharges shaping air for controlling a diffusion pattern of the atomized paint; a high-voltage generator that applies a high voltage to the paint gun; and a controller that controls the high voltage to be applied from the high-voltage generator, wherein the high-voltage generator generates a high positive voltage.

With the electrostatic painting apparatus described above, electrostatic painting is performed while positively charging the paint, thereby preventing a decrease in the electrification amount of the paint, which may otherwise be caused when the paint contacts the shaping air.

The electrostatic painting apparatus further includes an electrification portion that aggressively causes positive electrification of the shaping air discharged from the air discharge portion.

With this structure, the positive electrification of the shaping air is caused aggressively, and therefore the electrification amount of the paint increases when the paint contacts the shaping air.

The electrification portion is an air supply portion that supplies air to the air discharge portion and that is made of a material which becomes negatively electrified.

With this structure, the positive electrification of the shaping air can be caused more effectively, and therefore the electrification amount of the paint is further increased by causing the paint to contact the shaping air.

The controller may set, as the high voltage to be applied from the high-voltage generator, a first energization voltage that is suitable for electrostatic painting and a second energization voltage that is lower than the first energization voltage, and cause the first energization voltage and the second energization voltage to be alternately output in pulses each having a predetermined pulse width, a predetermined pulse interval, and a predetermined amplitude.

With this structure, an electric field having a high intensity and a large area develops, thereby increasing the Coulomb force that acts on the paint particles and thus improving the paint adhesion efficiency.

A second aspect of the invention relates to an electrostatic painting method including: generating a high positive voltage at a paint gun such that an electric field develops between a painting target and the paint gun: and performing electrostatic painting on the painting target while positively charging a paint sprayed from the paint gun.

According to the electrostatic painting method described above, it is possible to prevent a decrease in the electrification amount of the paint, which may otherwise be caused when the paint contacts the shaping air.

In the electrostatic painting method described above, positive electrification of shaping air that is discharged from the paint gun is aggressively caused.

Thus, the electrification amount of the paint is increased by causing the paint to contact the shaping air.

In the electrostatic painting method described above, the positive electrification of the shaping air is caused using an air supply portion that supplies air to an air discharge portion of the paint gun and that is made of a material which becomes negatively electrified.

Thus, the positive electrification of the shaping air can be caused more effectively, and therefore the electrification amount of the paint further is increased by causing the paint to contact the shaping air.

The electrostatic painting method described above may further include: setting, as high voltages to be applied, a first energization voltage that is suitable for electrostatic painting and a second energization voltage that is lower than the first energization voltage; and causing the first energization voltage and the second energization voltage to be alternately output in pulses each having a predetermined pulse width, a predetermined pulse interval, and a predetermined amplitude, so as to develop, between the painting target and the paint gun, an electric field having a high intensity and a large area as compared to an intensity and an area of an electric field that.develops when the first energization voltage is continuously applied.

Thus, an electric field having a high intensity and a large area develops, thereby increasing the Coulomb force that acts on the paint particles and thus improving the paint adhesion efficiency.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG 1 is a view schematically showing the entire structure of an electrostatic painting apparatus according to a first example not part of the invention;
FIG 2 is a view schematically showing the configuration of a high-voltage generator of the electrostatic painting apparatus according to the first example and a comparative example;
FIG 3A is a view schematically showing the state of inductive electrification that occurs when the electrostatic painting apparatus according to the first example is used (i.e., when a positive voltage is applied);
FIG 3B is a view schematically showing the state of inductive electrification that occurs when an electrostatic painting apparatus in the comparative example is used (i.e., when a negative voltage is applied);
FIG 4A is a view schematically showing the state of electrostatic painting that is performed by the electrostatic painting apparatus according to the first example (i.e., when a positive voltage is applied);
FIG 4B is a view schematically showing the state of electrostatic painting that is performed by the electrostatic painting apparatus in the comparative example (i.e., when a negative voltage is applied);
FIG. 5 is a view schematically showing the state of electrostatic painting that is performed by an etectrostatic painting apparatus according to an embodiment of the invention (i.e., when a positive voltage is applied);
FIG. 6 is a view schematically showing the state of electrostatic painting that is performed by an electrostatic painting apparatus according to a third example not part of the invention;
FIG 7A is a graph illustrating the relationship between temporal change in the applied voltage and temporal change in the discharge current, which has been found ' when the electrostatic painting apparatus in the comparative example is used;
FIG 7B is a graph illustrating the relationship between temporal change in the applied voltage and temporal change in the discharge current, which has been found when the electrostatic painting apparatus according to the third example is used;
FIG 8A is a view schematically showing the state of an electric field that is developed by the electrostatic painting apparatus in the comparative example when a voltage V₁ is continuously applied;
FIG 8B is a view schematically showing the state of an electric field that is developed by the electrostatic painting apparatus in the comparative example when a voltage V₂ is continuously applied; and
FIG 9 is a triboelectric series chart.

### DETAILED DESCRIPTION OF EMBODIMENTS

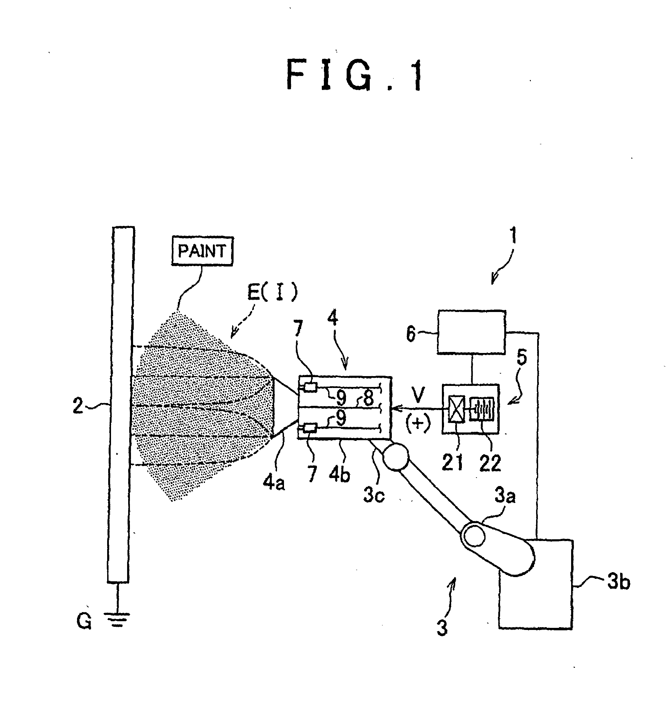

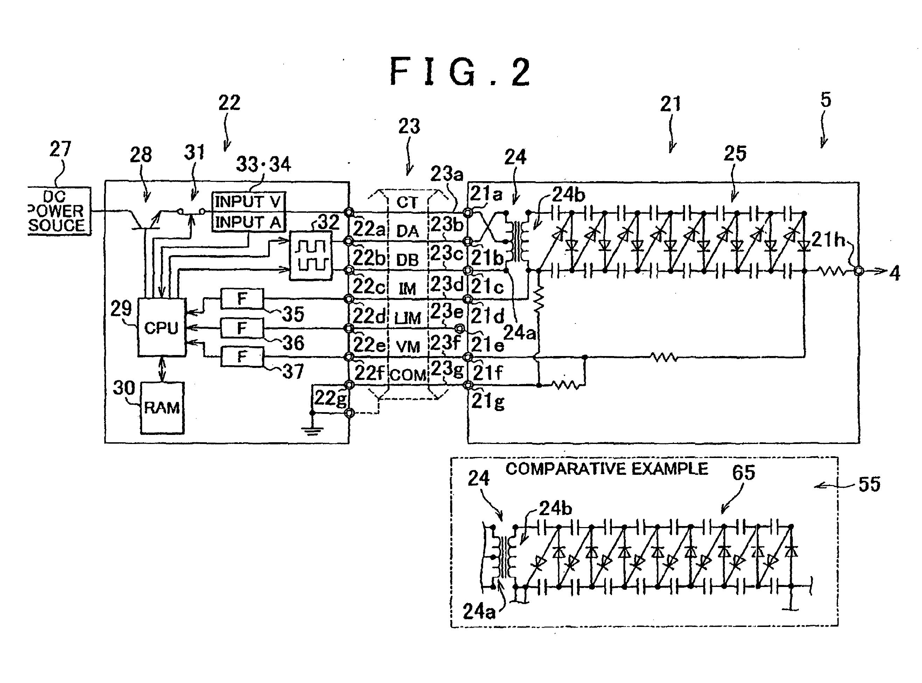

An electrostatic painting apparatus according to a first example not part of the invention will be described with reference to FIGs. 1 and 2. As shown in FIG 1, an electrostatic painting apparatus I according to the first example performs electrostatic painting on a workpiece 2, which is a painting target. The electrostatic painting apparatus 1 includes a robot 3, a paint gun 4, a high-voltage generator 5, a controller 6, and air nozzles 7. The workpiece 2 is grounded (i.e., connected to the ground G), and therefore the electric potential of the workpiece 2 is "0".

The robot 3 is a multi-joint robot that is capable of moving, relative to the workpiece 2, the paint gun 4 at a desired speed and in a desired attitude, and includes an arm 3a and a base portion 3b. The paint gun 4 is supported by a hand portion 3c at the tip of the arm 3a. Although a multi-joint robot is used as the robot 3 of the electrostatic painting apparatus 1 in the first example, the robot of the electrostatic painting apparatuses according to the invention is not limited to a multi-joint robot

The paint gun 4 is a painting device that applies a paint to the workpiece , 2 by spraying the paint toward the workpiece 2, and includes a bell cup 4a and a gun body 4b. The paint gun 4 is a rotational atomization type painting device that atomizes the liquid paint spread on the inner face of the bell cup 4a, by turning the bell cup 4a using an actuator (not shown), for example, an air motor. The high-voltage generator 5 is electrically connected to the gun body 4b, and a paint delivery tube 8 for delivering the paint, air delivery tubes 9 for delivering the shaping air, etc. are also connected to the gun body 4b.

Although a rotational atomization type paint gun is used as the paint gun 4 of the electrostatic painting apparatus 1 in the first example as described above, the paint gun of the electrostatic painting apparatus is not limited to a rotational atomization type paint gun. That is, paint guns of various other types, including those with a non-rotatable head, may be used. Further, although the high-voltage generator 5 is provided outside the paint gun 4 in the first example , the paint gun of the electrostatic painting apparatus is not limited to a paint gun in which a high-voltage generator is not incorporated. That is, the paint gun and the high-voltage generator may be provided in various other forms and arrangements. For example, a paint gun in which a high-voltage generator is incorporated may be used. Further, although the paint is delivered to the paint gun 4 through the paint delivery tube connected to the gun body 4b in the first example, the paint supply to the paint gun 4 may be accomplished by various other manners. For example, the paint may be supplied from a cartridge type container storing the paint, which is fitted to a gun body.

Each air nozzle 7 is a nozzle portion that discharges the shaping air for adjusting the manner of paint diffusion, and the air delivery tubes 9 for delivering the shaping air are connected to the air nozzles 7. The paint diffusion pattern is adjusted by adjusting, for example, the shape of the discharge outlet of each air nozzle 7 and the pressure of the air supplied from the air delivery tubes 9.

The air nozzles 7 are arranged at the front end face nf the gum body 4b so as to discharge the air in directions toward the bell cup 4a. Thus, the air nozzles 7 discharge the shaping air toward the backside of the bell cup 4a. Therefore, the shaping air discharged from the air nozzles 7 diffuses in such a pattern that the shaping air surrounds the bell cup 4a. The air discharge portion for discharging the shaping air is nozzle-shaped in the first example. However, the air discharge portion is not limited to a nozzle-shaped air discharge portion. That is, air discharge portions of various other types may be used. For example, a so-called shaping air ring that forms a ring-shaped air discharge portion may be used as the air discharge portion.

The high-voltage generator 5 has a voltage booster portion 21 and a power supply portion 22 that generates a voltage. The high-voltage generator 5 generates a high positive electrostatic voltage of approximately several tens kilovolts by boosting, using the voltage booster portion 21, the voltage generated by the power supply portion 22. It is to be noted that in the following descriptions, the value of the high electrostatic voltage applied by the high-voltage generator 5 will be referred to as voltage V, and the value of the discharge current that flows during the application of the voltage V will be referred to as current I. Further, the electrostatic field that develops as the discharge current I flows will be referred to as electric field E.

The high-voltage generator 5 is electrically connected to the paint gun 4 via a cable, and applies the voltage V, which is a high positive voltage, to the paint gun 4. When the high-voltage generator 5 applies the positive voltage V to the paint gun 4, the discharge current 1 flows from the workpiece 2, which is connected to the ground G (i.e., the electric potential of which is 0 V), to the front edge of the bell cup 4a. Thus, the electric field E, which is an electrostatic field in which the electric potential changes from the workpiece 2 toward the bell cup 4a, develops. As such, electrostatic painting is performed on the workpiece 2 using the electric field E.

Although the high-voltage generator 5 of the electrostatic painting apparatus 1 is connected to the paint gun 4 and applies the voltage V to the paint gun 4 in the first example, the element to which the high-voltage generator of the electrostatic painting apparatuses is not limited to the paint gun 4. That is, for example, the high-voltage generator may be connected to an electrode that is provided at the paint gun in order to develop an electric field around the paint gun, and a voltage may be applied to the electrode by the high-voltage generator. In such an electrostatic painting apparatus, an electric field develops between the electrode and the work, and the paint particles are electrified by the electric field. It is to be noted that the paint gun and the electrode, which is provided at the paint gun, in this example modification described above may be collectively regarded as the paint gun in the invention.

Further, the controller 6 is connected to the high-voltage generator 5. The controller 6 is capable of controlling the high electrostatic voltage (i.e., the voltage V) generated by the high-voltage generator 5.

Next, the high-voltage generator 5 of the electrostatic painting apparatus 1 according to the first example will be described with reference to FIG. 2. As shown in FIG 2, the high-voltage generator 5 includes the voltage booster portion 21, the power supply portion 22, and a low-voltage cable 23.

The voltage booster portion 21 boosts the voltage generated by the power supply portion 22. The voltage booster portion 21 includes a high voltage transformer 24 and a Cockcroft-Walton voltage booster circuit (will hereinafter be referred to as "CW circuit") 25 that serves as both a rectifier for high voltage generation and a multiplier for high voltage generation and that is formed of multiple capacitors, diodes which are provided in given combinations.

The voltage booster portion 21 includes an input terminal 21 a that is connected to a center phase (will hereinafter be referred to as "CT-phase") of a primary winding 24a of the high voltage transformer 24, an input terminal 21b that is connected to a drive A phase (will hereinafter be referred to as "DA phase") of the primary winding 24a, and an input terminal 21 that is connected to a drive B phase (will hereinafter be referred to as "DB phase") of the primary winding 24a. Further, the voltage booster portion 21 has an output terminal 21d for outputting a current feedback signal (will hereinafter be referred to as "TM signal") that indicates the value of the overall current in the CW circuit 25, an output terminal 21f for outputting a voltage feedback signal (will hereinafter be referred to as "VM signal") that indicates the value of the high voltage obtained through the voltage boosting at the CW circuit 25, a ground terminal 21g via which the CW circuit 25 is grounded, a high voltage output terminal 21h for outputting the high voltage obtained through the voltage boosting at the CW circuit 25, etc. The output terminal 21h is connected to the paint gun 4 via, for example, a cable, so that the paint gun 4 is energized with the voltage output from the high-voltage generator 5.

The diodes in the CW circuit 25 of the high-voltage generator 5 are arranged such that their polarities (i.e., their mount directions) are all opposite to those of the respective diodes in a CW circuit 65 of a high-voltage generator 55 for generating a high negative voltage, which is illustrated as a comparative example in the double-dot chain square in FIG 2. Thus, the CW circuit 25 of the high-voltage generator 5 is capable of generating a high positive voltage. That is, the high-voltage generator 5 can be easily obtained by, for example, modifying the CW circuit 65 of the high-voltage generator 55 of the comparative example.

The high voltage transformer 24 has the primary winding 24a and a secondary winding 24b, and the CW circuit 25 is connected to the secondary winding 24b side.

The power supply portion 22 generates the voltage from which the high voltages for energizing the paint gun 4, etc. are obtained. The power supply portion 22 has a direct current power source 27, an amplifier 28, a CPU (Central Processing Unit) 29, a RAM (Random Access Memory) 30, a relay 31, a push-pull oscillator 32, a voltage sensor 33, a current sensor 34, band-pass filters 35, 36, and 37, etc.

The power supply portion 22 generates an energization voltage by adjusting, using the amplifier 28, the output voltage of the direct current power source 27 in accordance with a command value output from the CPU 29. The energization voltage thus generated is adjusted to be equal the command value through feedback of the values detected by the voltage sensor 33 and the current sensor 34, which are provided on the line for supplying the energization voltage, to the CPU 29.

The IM signal and VM signal described above are fed back to the CPU 29, and the CPU 29 determines the command value to output from to the amplifier 28 by performing computation based on the respective feedback signals, given conditions stored in the RAM 30, etc. The IM signal, the VM signal, etc. are input in the CPU 29 via the band-pass filters 35, 36, and 37, and so on.

The power supply portion 22 generates, using the push-pull oscillator 32, the drive signals to be input in the respective drive phases of the primary winding 24a, in accordance with command values output from the CPU 29. The CPU 29 determines the command values, which are to be output from the CPU 29 to the push-pull oscillator 32, by performing computation based on the respective feedback signals (i.e., the IM and VM signals fed back to the CPU 29), given conditions stored in the RAM 30, and so on.

The power supply portion 22 further includes the relay 31 arranged on the energization voltage supply line. When an abnormality is detected from the result of computations that the CPU 29 has performed based on the respective feedback signals, given conditions stored in the RAM 30, and so on, the relay 31 is immediately operated to interrupt the supply of the energization voltage. In this way, for example, it is possible to reliably prevent the high-voltage generator 5 from outputting abnormally high voltages.

The power supply portion 22 includes an output terminal 22a for outputting the energization voltage for the CT phase of the primary winding 24a, an output terminal 22b for outputting the drive signals for the DA phase of the primary winding 24a, and an output terminal 22c for outputting the drive signals for the DB phase of the primary winding 24a. Further, the power supply portion 22 includes an input terminal 22d for inputting the IM signal, to the CPU 29, an input terminal 22e for inputting a leak-current feedback signal to the CPU 29, an input terminal 22f for inputting the VM signal to the CPU 29, a ground terminal 22g via which the power supply portion 22 is grounded, etc.

The low-voltage cable 23 is a bundle of various cables for electrically connecting the voltage booster portion 21 to the power supply portion 22, and includes a CT input cable (CT) 23a, a DA input cable (DA) 23b, a DB input cable (DB) 23c, an IM signal cable (IM) 23d, a leak-current feedback cable (LIM) 23e, a VM signal cable (VM) 23f, a common cable (COM) 23g, etc.

Although the high-voltage generator 5 including the CW circuit 25 is fused in the first example, the high-voltage generator of the electrostatic painting apparatuses is not limited to a high-voltage generator including a CW circuit. That is, any high-voltage generator may be used as long as it is capable of generating a high positive voltage for energizing a paint gun, or the like.

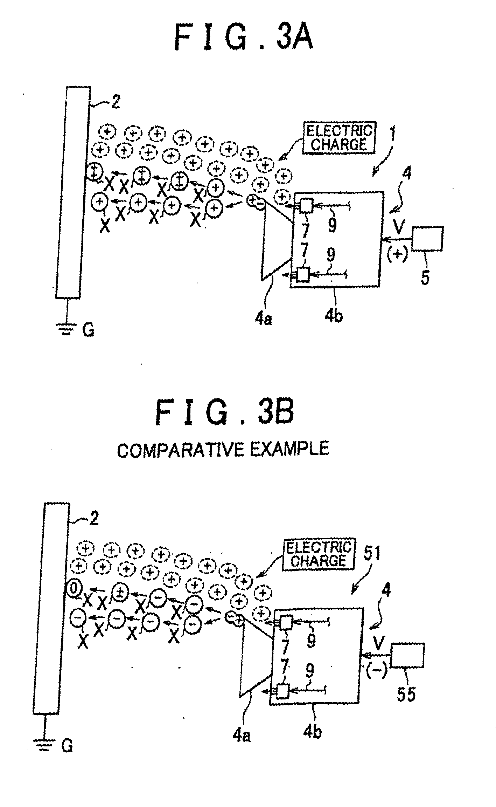

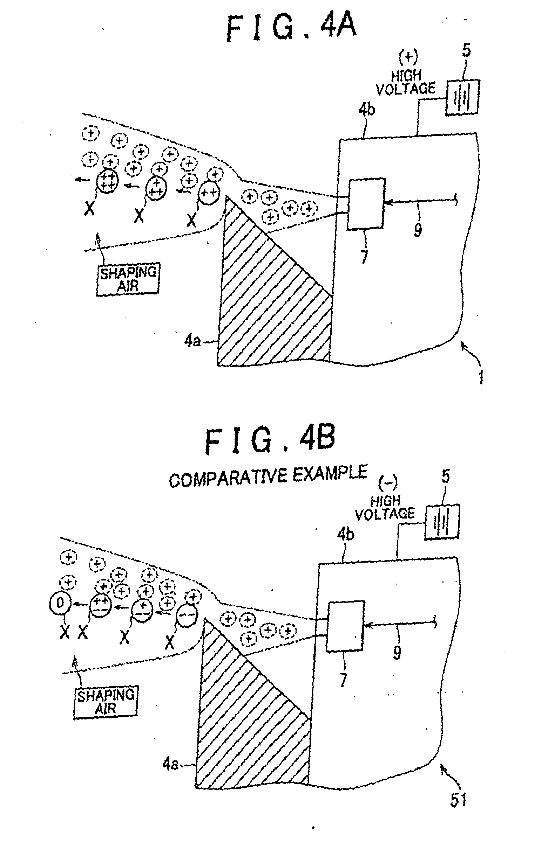

Next, the electrified state of the paint particles and the state of electrostatic painting that is performed by an electrostatic painting apparatus will be described with reference to FIGs. 3A, 3B, 4A, and 4B. As shown in FIG 3B, in an electrostatic painting apparatus 51 of the comparative example, the high-voltage generator 55 energizes the paint gun 4 with a high negative voltage. With this structure, particles x of the paint sprayed from the bell cup 4a are inductively electrified when leaving the bell cup 4a, due to the negative electric charge carriers that are present in the vicinity of the bell cup 4a after emitted therefrom. Thus, the paint particles x are discharged in a negatively electrified state.

As shown in FIG. 4B, the paint particles x that have been negatively electrified through the inductive electrification stated above are electrically neutralized due to the positive electric charge carriers present in the air (i.e., the shaping air). In a case where electrostatic painting is performed using the electrostatic painting apparatus 51 in the comparative example, therefore, the final negative electrification amount of the paint particles x is relatively small.

On the other hand, as shown in FIG 3A, in the electrostatic painting apparatus 1 according to the first example, the high-voltage generator 5 energizes the paint gun 4 with a high positive voltage. Therefore, the paint particles x sprayed from the bell cup 4a are inductively electrified when leaving the bell cup 4a, due to the positive electric charge carriers that are present in the vicinity of the bell cup 4a after emitted therefrom. Thus, the paint particles x are discharged in a positively electrified state.

As shown in FIG 4A, further, since only the positive electric charge carriers emitted from the bell cup 4a are present around the sprayed paint particles x or only the positive electric charge carriers in the air (i.e., the shaping air) are present around the sprayed paint particles x, the paint particles x continue to be positively electrified, and thus their positive electrification progresses effectively That is, the positive electric charge carriers present in the air promote the positive electrification of the paint particles x.. Therefore, in a case where electrostatic painting is performed using the electrostatic painting apparatus I according to the first example, the positive electric charge carriers present in the shaping air do not impede the electrification of the paint particles x, but they are effectively utilized to further increase the amount of electrification of the paint particles x.

The Coulomb force F acting on the paint particles x in an electric field can be expressed as F = qE where q represents the amount of electrification of the paint particles x and E represents the electric field (i.e., the electric field intensity). That is, the larger the electrification amount q, the larger the Coulomb force F acting on the paint particles x, that is, the larger the force by which the paint particles x are attracted to the workpiece 2. Therefore, increasing the electrification amount q as described above achieves a paint adhesion efficiency higher than that in the comparative example.

As described above, the electrostatic painting apparatus 1 according to the first example includes: the paint gun 4 having the bell cup 4a serving as an atomization portion for atomizing the paint and the air nozzles 7 each serving as an air discharge portion for discharging the shaping air for controlling the diffusion pattern of the atomized paint; the high-voltage generator 5 that energizes the paint gun 4 (or an electrode that may be provided at the paint gun 4 as mentioned above) with a high voltage; and the controller 6 that controls the high voltage to be output from the high-voltage generator 5, and the high-voltage generator 5 is adapted to generate a high positive voltage. Accordingly, it is possible to perform electrostatic painting under a condition where the paint is positively electrified.

Meanwhile, the first example may be regarded as an electrostatic paining method using the electrostatic painting apparatus 1 that is provided with: the paint gun 4 having the bell cup 4a serving as an atomization portion for atomizing the paint and the air nozzles 7 each serving as an air discharge portion for discharging the shaping air for controlling the diffusion pattern of the atomized paint; the high-voltage generator 5 that energizes the paint gun 4 (or an electrode that may be provided at the paint gun 4 as mentioned above) with a high voltage; and the controller 6 that controls the high voltage to be output from the high-voltage generator 5. According to this electrostatic painting method, electrostatic painting is performed while generating a high positive voltage using the high voltage generator 5 so that the electric field E develops between the workpiece 2, which is the painting target, and the paint gun 4 (more specifically, the bell cup 4a), and thus the paint sprayed from the paint gun 4 is positively electrified. Therefore, it is possible to prevent a decrease in the electrification amount of the paint, which may otherwise be caused when the paint contacts the shaping air.

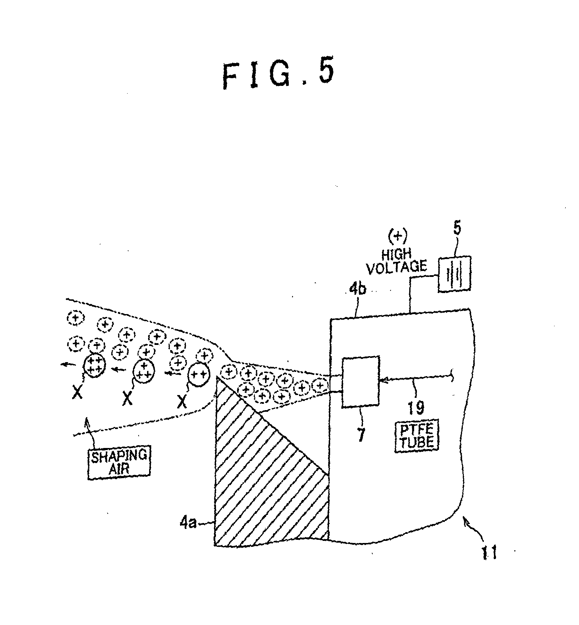

Next, an electrostatic painting apparatus according to an embodiment of the invention will be described with reference to FIG 5. As shown in FIG 5, in an electrostatic painting apparatus 11, according to an embodiment of the invention, air is supplied to the air nozzles 7 through air delivery tubes 19.

It is known that if one of the inaterials included in a triboelectric series that is usually defined as a triboelectric series chart, such as the one shown in FIG 9, contacts-another material the position of which in the same triboelectric series is distant from the former material, the materials are both electrically charged to a large extent. For example, as shown in the triboelectric series chart shown in FIG 9, fluoroplastic (PTFE) is likely to be negatively electrified and is very distant from "air" in the triboelectric series. "Material that is likely to be negatively electrified" in the invention means any material that is on the negative side with respect to 0 in a triboelectric series, and means any material that is on the right side of cotton in the example in FIG. 9. Note that the triboelectric series in FIG 9 is just an example of a triboelectric series, and a material that is not shown in FIG 9 may be included in the triboelectric series.

In the comparative example, the tube for delivering the shaping air to the air nozzles 7 is required only to have the function of delivering air, and therefore no particular attention has been paid to the material of the tube and to the position of the material in a triboelectric series. For example, tubes made of polyamide synthetic fibers have been often used for no particular purposes. As shown in the tiboelectric series chart shown in FIG 9, polyamide synthetic fibers as well as air is likely to be positively electrified, and it is closer to air" in the triboelectric series than, for example, fluoroplastic (PTFE) is. Therefore, if the shaping air is delivered to the air nozzles 7 via tubes made of a polyamide synthetic fiber, the shaping air is not positively charged effectively.

In consideration of the above, fluoroplastic (PTFE) was intentionally selected as the material of the air delivery tubes 19 of the electrostatic painting apparatus 11 according to an embodiment of the invention, making the air delivery tubes 19 different from the air delivery tubes 9 of the electrostatic painting apparatus 1 according to the first example. It is to be noted that the structural features of the electrostatic painting apparatus 11 other than those of the air delivery tubes 19 are the same as those of the electrostatic painting apparatus 1, and therefore they will not be described again.

As shown in FIG. 5, in the electrostatic painting apparatus 11 according to an embodiment of the invention, the high-voltage generator 5 energizes the paint gun 4 with a high positive voltage, and the shaping air is delivered to the air nozzles 7 via the air delivery tubes 19 that are made of fluoroplastic (PTFE), thus aggressively causing the positive electrification of the shaping air. As such, in a case where electrostatic painting is performed using the electrostatic painting apparatus 11 according to an embodiment of the invention, more positive electric charge carriers can be diffused into the shaping than when electrostatic painting is performed using the electrostatic painting apparatus 1 according to the first example.

Therefore, if the paint particles x positively electrified contact the shaping air immediately after being sprayed, positive electrification of the paint particles x is strongly promoted by the positive charge carriers that exist in a large amount in the shaping air. That is, the electrostatic painting apparatus 11 aggressively generates positive electric charge carriers in the shaping air and increases the amount of electrification of the paint particles x using them effectively.

As described above, the electrostatic painting apparatus 11 according to an embodiment of the invention has an electrification portion that aggressively causes positive electrification of the shaping air discharged from the air nozzles 7, and the air delivery tubes 19 made of a material which is likely to be negatively electrified and the position of which in the triboelectric series is distant from air (fluoroplastic (PTFE) in an embodiment) are provided as the electrification portion stated above. Thus, the electrostatic painting apparatus 11 according to the invention is capable of causing positive electrification of the shaping air more effectively.

Meanwhile, the invention may be regarded as an electrostatic painting method using the electrostatic painting apparatus 11. This electrostatic painting method aggressively causes positive electrification of the shaping air discharged from the air nozzles 7. According to this electrostatic painting method, more specically, in order to more effectively increase the amount of the electrification of the paint that occurs when the paint contacts the shaping air, positive electrification of the shaping air is aggressively caused by delivering the shaping air to the air nozzles 7 via the air delivery tubes 19 that are made of a material which is likely to be negatively electrified and the position of which in the triboelectric series is distant from air (fluoroplastic (PTFE) in the second example embodiment).

Although the air delivery tubes 19 are made of fluoroplastic (PTFE) in an embodiment, the material of the air delivery tubes 19 of the electrostatic painting apparatus according to the invention is not limited to fluoroplastic (PTFE). That is, fluoroplastic (PTFE) is merely an example material that is likely to be negatively electrified. That is, air delivery tubes for the electrostatic painting apparatuses of the invention may be made of any other material, such as silicon and vinyl chloride, as long as its position in a triboelectric series is sufficiently distant from "air". It is preferable that a material that is more likely to be negatively electrified be selected from among the materials shown in a triboelectric series chart, such as the one shown in FIG. 9. Further, although the air delivery tubes 19 are made of fluoroplastic (PTFE), etc. in an embodiment, it is to be understood that the positive electrification of the shaping air may be caused more aggressively if the air nozzles 7 are entirely, or partially, made of fluoroplastic (PTFE), etc, as well as the air delivery tubes 19. In addition, although the air delivery tubes 19 each serve as an electrification portion that positively electrifies the shaping air in an embodiment, the structure of the electrification portion in the electrostatic painting apparatuses according to the invention is not limited to this.

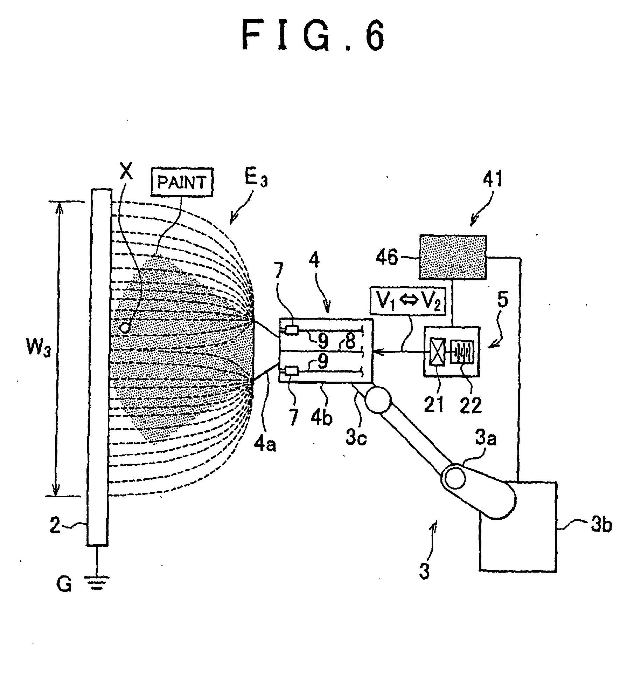

Next, an electrostatic painting apparatus according to the third example will be described with reference to FIGs. 6 to 8B. As shown in FIG 6, an electrostatic painting apparatus 41 according to the third example includes a controller 46 in place of the controller 6 described above. The controller 46 changes the waveform of the high electrostatic voltage (i.e., the voltage V) generated by the high-voltage generator 5 into a pulse waveform, and this feature makes the controller 46 different from the controller 6 that is provided in the electrostatic painting apparatus 1 according to the first example and the electrostatic paining apparatus 11 according to the the invention. It is to be noted that the structural features of the electrostatic painting apparatus 41 other than those of the controller 46 are the same as those of the electrostatic painting apparatus 1, and therefore they will not be described again.

Further, although the electrostatic painting apparatus 41 according to the third example is identical in structure to the electrostatic painting apparatus 1 according to the first example except for the controller 46, the electrostatic painting apparatus 41 may alternatively be structured to be identical, except the controller 46, to the electrostatic painting apparatus 11 according to the invention, that is, it may include the air delivery tubes 19 in place of the air delivery tubes 9.

The controller 46 controls the high positive electrostatic voltage (i.e., the voltage V) generated by the high-voltage generator 5. In the electrostatic painting apparatus 41, more specifically, the controller 46 outputs command signals indicating pulse conditions to the high-voltage generator 5, and the waveform of the voltage V generated by the high-voltage generator 5 is changed into a pulse waveform in accordance with the command signals output from the controller 46. It is to be noted that a pulse waveform represents a waveform that cyclically oscillates between the maximum and minimum levels (values), and examples of a pulse waveform include a square (rectangular) waveform, a sine waveform, waveforms similar to those, etc. Further, it is to be noted that a pulse conditions represent respective factors for defining the target pulse waveform, and include the amplitude (voltage difference) and the pulse period (pulse width and pulse interval).

The controller 46 is connected to the robot 3 and receives, in real time, signals indicating the operational state (position, attitude, moving speed, etc.) of the paint gun 4, from the robot 3. Further, the information regarding the specifications of the workpiece 2 and the painting conditions (i.e, various conditions including the type or kind of the paint used, the amount of paint to be sprayed, and so on) are stored in advance in the controller 46, and the controller 46 detects the electrostatic painting state based on the signals indicating the information regarding the specifications of the workpiece 2 and painting conditions and the signals indicating the operational state of the paint gun 4, and then determines the presently optimum pulse conditions by computing them in real time. Then, the controller 46 outputs command signals indicating the presently optimum pulse conditions, which have been determined through the real-time computations, to the high-voltage generator 5.

With regard to the phrase "type or kind of the paint", it is to be noted that paints that have different constituents and thus have different electrification characteristics and conductivities should be deemed as being different in "type or kind". For example, a clear coating paint and a base paint are deemed as being different in type or kind from each other.

The controller 46 produces, in real time, the command signals in accordance with the present electrostatic painting state in the third example. However, the pulse conditions corresponding to the entire electrostatic painting procedure (i.e., all the electrostatic painting processes from the beginning to the end of the painting) may be stored in advance into the controller 46 through teaching, and the controller 46 may output the command signals to the high-voltage generator 5 as specified by the teaching.

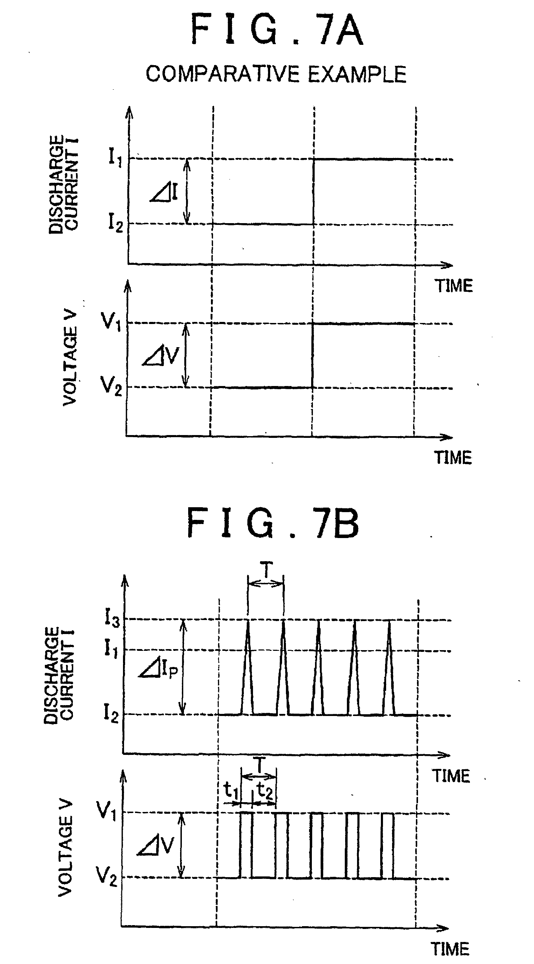

Hereinafter, how each electrostatic painting apparatus develops the electric field E will be described. As in a comparative example illustrated in FIG 7A, the first voltage V that is applied to the paint gun 4 during electrostatic painting will be referred to as "voltage V₁", and the value of the discharge current I that flows each time the voltage V₁ is applied continuously will be referred to as "current I₁". Note that the voltage V₁ is of a level that has been typically used to energize paint guns like the paint gun 4. Meanwhile, the second voltage V that is also applied to the paint gun 4 during electrostatic painting and is lower than the typically used voltage V₁ will be referred to as "voltage V₂", and the value of the discharge current I that flows each time the voltage V₂ is applied continuously will be referred to as "current I₂", and the difference between the discharge current I₁ that flows when the voltage V₁ is applied and the discharge current I₂ that flows when the voltage V₂ is applied will be referred to as "ΔI" (i.e., ΔI = I₁ - I₂).

In the case of the electrostatic painting apparatus 41 according to the third example, on the other hand, as shown in FIG. 7B, the high-voltage generator 5 energizes the paint gun 4 with the voltage V while switching the voltage value between two values that are equal to those of the voltages V₁ and V₂ in the comparative example, in other words, the high-voltage generator 5 alternately outputs the voltages V₁ and V₂ in pulses to the paint gun 4 in accordance with the signals output from the controller 46. If the voltages V₁ and V₂ are output in pluses as described above, the waveform of the resultant discharge current I becomes a pulse waveform including generally triangular waves each having a local peak. Hereinafter, the value of the discharge current I at each local peak will be referred to as "peak current I₃".

The form of each pulse generated through the switching between the voltages V₁ and V₂ can be defined using an amplitude ΔV representing the difference between the voltages V₁ and V₂, a pulse width t₁ that is a single unit duration of application of the voltage V₁, and a pulse interval t₂ that is a single unit duration of application of the lower voltage V₂. In this case, a pulse period T can be expressed as T = t₁ + t².

By adjusting the pulse conditions in accordance with the signals output from the controller 46, the peak current I₃ can be made larger than the discharge current I₁ that flows as the voltage V₁ is applied continuously as in the comparative example illustrated in FIG. 7A. That is, when electrostatic painting is performed using the electrostatic painting apparatus 41, the discharge current I (i.e., the peak current I₃) can be made larger than in the comparative example despite that the values of the voltage V generated by the high-voltage generator 5 are equal to those of the comparative example, that is, the voltages V₁ and V₂.

A possible reason why the peak current Iⱼ is larger than the discharge current I₁ is as follows. In a state where the voltages V₁ and V₂ are each applied continuously as in the comparative example shown in FIG. 7A, the region where the electric field E is present is already full of electrons, and therefore no large flow of electrons occurs. On the other hand, in a state where the voltages V₁ and V₂ are alternately output in pulses as illustrated in FIG. 7B, rapid flows of electrons occur in the region where the electric field E is present, and therefore large currents flow as compared to a state where the voltages V₁ and V₂ are each applied continuously.

Further, since the intensity of the electric field E changes in accordance with the level of the discharge current 1, as the peak current I₃, which is larger than the discharge current I in the comparative example, flows, an electric field E having a higher intensity develops. In the following, the difference that arises between the discharge current I during application of the voltage V₁ and that during application of the voltage V₂ in a state where the voltages V₁ and V₂ are alternately output in pulses will be referred to as "ΔIₚ" (i.e., ΔIp = I₃ - I₂).

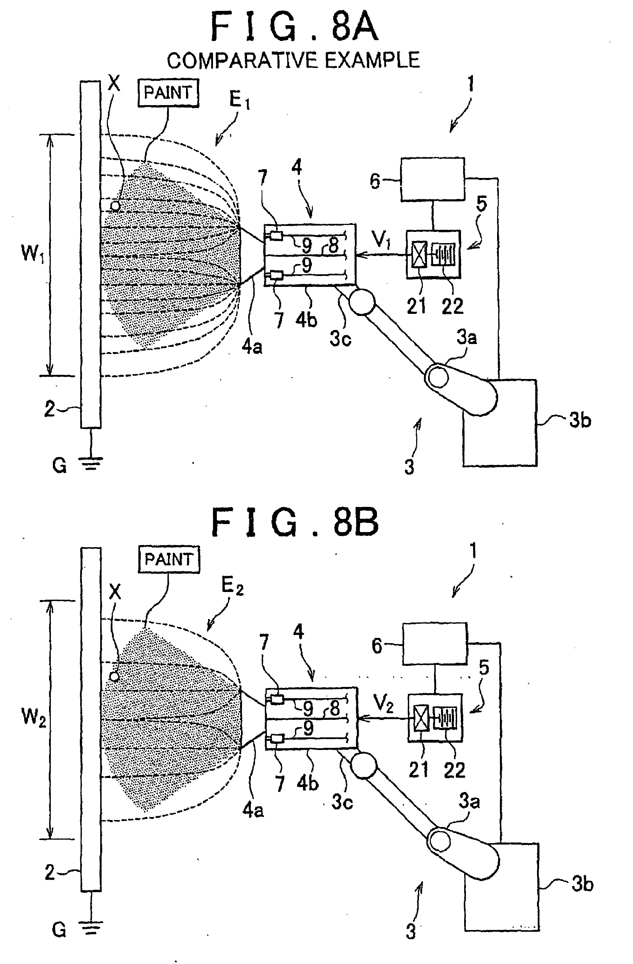

Next, the state of electrostatic painting performed, with the pulsed voltages, by the electrostatic painting apparatus 41 according to the third example will be described. In a case where the voltage V₁ is continuously applied to the paint gun 4 from the high-voltage generator 5 as illustrated in FIG. 7A, an electric field E₁ indicated by the electric force lines in FIG. 8A develops between the workpiece 2 and the bell cup 4a. It is to be noted that a narrower interval between the electric force lines represents a higher local intensity of the electric field E₁.

The voltage V₁ is set in consideration of the required diffusion pattern of the paint to be sprayed from the paint gun 4, etc. in order to develop an effective area W of the electric field E₁ such that all the paint particles x reach the workpiece 2 through the effective area W₁ of the electric field E₁. It is to be noted that "area" of each electric field represents an electric field area where the intensity of the electric field is high enough to produce the Coulomb force having a magnitude necessary for causing adhesion of the paint, that is, it does not represent the area of the entire electric field

Further, in a case where the voltage V₂ is continuously applied to the paint gun 4 from the high-voltage generator 5 as illustrated in FIG 7A, an electric field E₂ indicated by the electric force lines in FIG. 8B develops between the workpiece 2 and the bell cup 4a. When the applied voltage is low (e.g., when the voltage V₂ is applied), an effective area W₂ of the electric field E₂, which is smaller than the effective area W₁ of the electric field E₁, is developed. Further, in the electric field E₂, the intervals between the electric force lines are wider than the intervals between the electric force lines in the electric field E₁, that is, the intensity of the electric field E₂ is lower than that of the electric field E₁.

On the other hand, in the case of the electrostatic painting apparatus 41 according to the third example, using the controller 46 and the high-voltage generator 5, the voltages V₁ and V₂ are alternately output in pluses to the paint gun 4 as illustrated in FIG. 7B, so that an electric field E₃ indicated in FIG 6 develops between the workpiece 2 and the bell cup 4a. An effective area W₃ of the electric field E₃ is larger than the effective area W₁ of the electric field E₁. Further, the intervals between the electric force lines in the electric field E₃ are narrower than the intervals between the electric force lines in the electric field E₁, that is, the intensity of the electric field E₃ is higher than that of the electric field E₁. More specifically, the electrostatic painting apparatus 41 adjusts the intensity of the electric field E₃ and the effective area W₃ of the electric field E₃ by changing the pulse conditions (i.e., the pulse width t₁, the pulse interval t₂, and the amplitude ΔV) in accordance with the signals output from the controller 46.

The higher the intensity of the electric field E developed between the workpiece 2 and the bell cup 4a, the more the paint particles x are positively electrified by the electric field E, and thus the larger the electrification amount q of the paint particles x. With the electrostatic painting apparatus 41 according to the third example, therefore, the Coulomb force F that acts on the paint particles x that pass through the electric field E₃ and then adhere to the workpiece 2 is larger than that in the comparative example, due to the synergetic effect of the higher intensity of the electric field E and the larger electrification amount q, and thus the paint particles x are attracted to the workpiece 2 by larger forces, improving the paint adhesion efficiency.

As such, in a case where electrostatic painting is performed using the electrostatic painting apparatus 41 according to the third example, the amplitude ΔV can be made larger by reducing the lower voltage V₂, and thus the paint adhesion efficiency can be easily improved without raising the voltage V₁.

That is, in the electrostatic painting apparatus 41 according to the third example embodiment of the invention, the controller 46 is capable of setting, as the high positive voltages to be applied from the high-voltage generator 5, the first voltage V₁ that is an energization voltage suitable for electrostatic painting, and the second voltage V₂ that is an energization voltage lower than the first voltage V₁, and then controlling the voltages V₁ and V₂ to be alternately output in pulses each having a predetermined pulse width (i.e., the pulse width t₁), a predetermined pulse interval (i.e., the pulse interval t₂), respectively, and a predetermined amplitude (i.e., the amplitude ΔV).

Meanwhile, the third example may be regarded as an electrostatic painting method using the electrostatic painting apparatus 41. According to this method, the first voltage V₁ that is a positive voltage suitable for electrostatic painting and the second voltage V₂ that is a voltage lower than the first voltage V₁ are set, using the controller 46, as the high voltages to be applied from the high-voltage generator 5, and then the voltages V₁ and V₂ are, under the control by the controller 46, alternately output in pulses each having a predetermined pulse width (i.e., the pulse width t₁), a predetermined pulse interval (i.e., the pulse interval t₂), and a predetermined amplitude (i.e., the amplitude ΔV), thus developing, between the workpiece 2 and the paint gun 4, the electric field E₃ having a high intensity and a large area (i.e., the effective area W₃), as compared to the intensity and effective area W₁ of the electric field E₁ that develops in a case where the voltage V₁ is continuously applied from the high-voltage generator 5. According to this method, therefore, the Coulomb force F that acts on the paint particles x increases, and thus the paint adhesion efficiency improves.

## Claims

1. An electrostatic painting apparatus (11) comprising:
a paint gun (4) that includes an atomization portion (4a) that atomizes a paint and an air discharge portion (7) that discharges shaping air for controlling a diffusion pattern of the atomized paint;
a high-voltage generator (5) that applies a high voltage to the paint gun (4);
a controller (6) that controls the high voltage to be applied from the high-voltage generator (5); and an electrification portion (19) that aggressively causes positive electrification of the shaping air discharged from the air discharge portion (7)
wherein:
the high-voltage generator (5) generates a high positive voltage; and **characterized in that**,
the electrification portion (19) is an air supply portion that supplies air to the air discharge portion (7) and that is made of a material which becomes negatively electrified.

2. The electrostatic painting apparatus according to claim 1, wherein
the controller (6) sets, as the high voltage to be applied from the high-voltage generator (5), a first energization voltage (V₁) that is suitable for electrostatic painting and a second energization voltage (V₂) that is lower than the first energization voltage, and causes the first energization voltage (V₁) and the second energization voltage (V₂) to be alternately output in pulses each having a predetermined pulse width, a predetermined pulse interval, and a predetermined amplitude.

3. An electrostatic painting method comprising:
generating a high positive voltage at a paint gun (4) such that an electric field develops between a painting target (2) and the paint gun (4); and
performing electrostatic painting on the painting target (2) while positively charging a paint sprayed from the paint gun (4), wherein:
positive electrification of shaping air that is discharged from the paint gun (4) is aggressively caused; and **characterized in that**,
the positive electrification of the shaping air is caused using an air supply portion (19) that supplies air to an air discharge portion of the paint gun (4) and that is made of a material which becomes negatively electrified.

4. The electrostatic painting apparatus according to claim 3, further comprising:
setting, as high voltages to be applied, a first energization voltage (V₁) that is suitable for electrostatic painting and a second energization voltage (V₂) that is lower than the first energization voltage; and
causing the first energization voltage (V₁) and the second energization voltage (V₂) to be alternately output in pulses each having a predetermined pulse width, a predetermined pulse interval, and a predetermined amplitude, so as to develop, between the painting target and the paint gun (4), an electric field having a high intensity and a large area as compared to an intensity and an area of an electric field that develops when the first energization voltage is continuously applied.

## Patentansprüche

1. Vorrichtung (11) für elektrostatisches Lackieren, aufweisend:
eine Lackierpistole (4), die einen Zerstäubungsabschnitt (4a), der eine Farbe zerstäubt, und einen Luftauslassabschnitt (7) beinhaltet, der Formgebungsluft zum Steuern eines Diffusionsmusters der zerstäubten Farbe auslässt;
einen Hochspannungsgenerator (5), der eine Hochspannung an die Lackierpistole (4) anlegt;
eine Steuereinrichtung (6), die die vom Hochspannungsgenerator anzulegende Hochspannung steuert;
und einen Elektrifizierungsabschnitt (19), der aggressiv positive Elektrifizierung der Formgebungsluft verursacht, die vom Luftauslassabschnitt (7) ausgelassen wird,
wobei:
der Hochspannungsgenerator (5) eine positive Hochspannung erzeugt;
**dadurch gekennzeichnet, dass**
der Elektrifizierungsabschnitt (19) ein Luftbereitstellungsabschnitt ist, der dem Luftauslassabschnitt (7) Luft bereitstellt und aus einem Material gefertigt ist, das negativ elektrifiziert wird.

2. Vorrichtung für elektrostatisches Lackieren gemäß Anspruch 1, wobei
die Steuereinrichtung (6) als vom Hochspannungsgenerator anzulegende Hochspannung eine erste Speisespannung (V1), die für elektrostatisches Lackieren geeignet ist, und eine zweite Speisespannung (V2) festlegt, die niedriger als die erste Speisespannung ist, und die erste Speisespannung (V1) und die zweite Speisespannung (V2) veranlasst, alternativ in Pulsen ausgegeben zu werden, von denen jeder eine vorbestimmte Pulsbreite, ein vorbestimmtes Pulsintervall und eine vorbestimmte Amplitude aufweist.

3. Verfahren zum elektrostatischen Lackieren, umfassend:
Erzeugen einer positiven Hochspannung an einer Lackierpistole (4) derart, dass ein elektrisches Feld zwischen einem Lackierziel (2) und der Lackierpistole (4) entsteht; und
Ausführen von elektrostatischem Lackieren auf dem Lackierziel (2), während eine Farbe, die von der Lackierpistole (4) gesprüht wird, positiv geladen wird, wobei:
positive Elektrifizierung von Formgebungsluft, die aus der Lackierpistole (4) ausgelassen wird, aggressiv verursacht wird;
**dadurch gekennzeichnet, dass**
die positive Elektrifizierung der Formgebungsluft unter Verwendung eines Luftbereitstellungsabschnitts (19) verursacht wird, der einem Luftauslassabschnitt der Lackierpistole (4) Luft bereitstellt und der aus einem Material gefertigt ist, das negativ elektrifiziert wird.

4. Verfahren zum elektrostatischen Lackieren gemäß Anspruch 3, ferner umfassend:
Festlegen, als anzulegende Hochspannungen, einer ersten Speisespannung (V1), die für elektrostatisches Lackieren geeignet ist, und einer zweiten Speisespannung (V2), die niedriger als die erste Speisespannung ist; und
Veranlassen, dass die erste Speisespannung (V1) und die zweite Speisespannung (V2) abwechselnd in Pulsen mit jeweils vorbestimmter Pulsbreite, vorbestimmten Pulsintervall und vorbestimmter Amplitude ausgegeben werden, um so zwischen dem Lackierziel und der Lackierpistole (4) ein elektrisches Feld mit hoher Intensität und großer Fläche verglichen mit einer Intensität und einer Fläche eines elektrischen Felds hervorzubringen, das entsteht, wenn die Speisespannung kontinuierlich angelegt wird.

## Revendications

1. Appareil de peinture électrostatique (11) comprenant :
un pistolet à peinture (4) qui comporte une partie de pulvérisation (4a) qui pulvérise une peinture et une partie d'évacuation d'air (7) qui évacue l'air de mise en forme pour la commande d'un motif de diffusion de la peinture pulvérisée ;
un générateur de haute tension (5) qui applique une haute tension au pistolet à peinture (4) ;
un dispositif de commande (6) qui commande la haute tension à appliquer à partir du générateur de haute tension (5) ; et une partie d'électrisation (19) qui provoque de façon dynamique une électrisation positive de l'air de mise en forme évacué à partir de la partie d'évacuation d'air (7)
dans lequel :
le générateur de haute tension (5) générant une haute tension positive ; et **caractérisé en ce que**,
la partie d'électrisation (19) est une partie d'alimentation en air qui alimente de l'air à la partie d'évacuation d'air (7) et qui est constituée d'un matériau qui devient électrisé négativement.

2. Appareil de peinture électrostatique selon la revendication 1, dans lequel
le dispositif de commande (6) établit, en tant que haute tension à appliquer à partir du générateur de haute tension (5), une première tension d'excitation (V₁) qui est appropriée pour la peinture électrostatique et une deuxième tension d'excitation (V₂) qui est inférieure à la première tension d'excitation, et amène la première tension d'excitation (V₁) et la deuxième tension d'excitation (V₂) à être délivrées en sortie de façon alternée sous forme d'impulsions ayant chacune une largeur d'impulsion prédéterminée, un intervalle d'impulsion prédéterminé, et une amplitude prédéterminée.

3. Procédé de peinture électrostatique comprenant le fait :
de générer une haute tension positive au niveau d'un pistolet à peinture (4) de sorte qu'un champ électrique se développe entre une cible à peindre (2) et le pistolet à peinture (4) ; et
d'effectuer une peinture électrostatique sur la cible à peindre (2) tout en chargeant positivement une peinture pulvérisée à partir du pistolet à peinture (4), où :
une électrisation positive de l'air de mise en forme qui est évacué à partir du pistolet à peinture (4) est provoquée de façon dynamique ; et **caractérisé en ce que**,
l'électrisation positive de l'air de mise en forme est provoquée en utilisant une partie d'alimentation en air (19) qui alimente de l'air à une partie d'évacuation d'air du pistolet à peinture (4) et qui est constituée d'un matériau qui devient électrisé négativement.

4. Appareil de peinture électrostatique selon la revendication 3, comprenant en outre le fait :
d'établir, en tant que hautes tensions à appliquer, une première tension d'excitation (V₁) qui est appropriée pour la peinture électrostatique et une deuxième tension d'excitation (V₂) qui est inférieure à la première tension d'excitation ; et
d'amener la première tension d'excitation (V₁) et la deuxième tension d'excitation (V₂) à être délivrées en sortie de façon alternée sous forme d'impulsions ayant chacune une largeur d'impulsion prédéterminée, un intervalle d'impulsion prédéterminé, et une amplitude prédéterminée, de manière à développer, entre la cible à peindre et le pistolet à peinture (4), un champ électrique ayant une intensité élevée et une grande zone par rapport à une intensité et une zone d'un champ électrique qui se développe lorsque la première tension d'excitation est appliquée de façon continue.
